# EUROPEAN PATENT SPECIFICATION

(11) **EP 4 304 828 B1**
(45) Date of publication and mention of the grant of the patent: **27.11.2024**
(21) Application number: 22717649.2
(22) Date of filing: 04.03.2022
(51) Int. Cl.: B29C 41/06, B29C 37/00, B29C 41/20, B29D 22/00, F17C 1/16, F17C 1/06, B29L 31/00, B29C 41/04, B29C 41/22

(54) **BOSS-LINER STRUCTURE FOR A TYPE IV PRESSURE VESSEL**
NABENAUSKLEIDUNGSSTRUKTUR FÜR EINEN TYP-IV-DRUCKBEHÄLTER
STRUCTURE DE REVÊTEMENT DE BOSSAGE POUR UN RÉCIPIENT SOUS PRESSION DE TYPE IV

(30) Priority: 09.03.2021 BE 202105176
(43) Date of publication of application: 17.01.2024
(73) Proprietor: AMS Belgium, 3740 Bilzen (BE)
(72) Inventor: POTARGENT, Johan, 3740 Bilzen (BE)
(74) Representative: Sarlet, Stephanie
(86) International application number: PCT/IB2022/051934
(87) International publication number: WO 2022/189922

(56) References cited:
- JP-A- 2017 020 652
- JP-A- H07 158 798
- JP-A- H07 310 895
- JP-A- H10 332 085
- US-A1- 2009 266 823
- ANONYMOUS: "Shoulder to shoulder across borders: Light Vehicle 2025 Demonstrators", 4 June 2020 (2020-06-04), pages 1 - 16, XP055864495, Retrieved from the Internet <URL:https://www.lightvehicle2025.eu/wp-content/uploads/2020/06/H2_Tank_Web_Presentation-min.pdf> [retrieved on 20211123]

## Description

The present invention concerns a device for storing a pressurized gaseous or liquid medium. The invention relates to a device for storing a pressurized gaseous or liquid medium, of the kind specified in the preamble of claim 1. The invention further relates to a method for manufacturing such a device.

### Prior art

As part of a future energy mix that draws substantially from renewable energy sources (solar, wind, hydropower), gases, such as hydrogen, offer a solution for improved, more flexible power grids. In addition, manufacturers increasingly rely on systems using CNG and hydrogen as an alternative propulsion technology for heavy and light vehicles.

Devices for storing such gases are known in general from the art. Pressure vessels are typically used for storing a variety of liquids under pressure, such as for example for storing oxygen, natural gas, nitrogen, hydrogen, propane and other fuels.

Typically, such pressure vessels are divided into different types. A so-called type II pressure vessel is a pressure vessel provided with an inner container, the so-called liner, made of high-grade steel or stainless steel, and an outer shell surrounding this inner container, for example made of fiber reinforced material. A type III pressure vessel has an aluminum liner and a type IV pressure vessel typically has a liner of a plastic material, such as high density polyethylene (HDPE), surrounded by at least one outer casing of fiber reinforced plastic material. Such pressure vessels serve as devices for storing gases - or liquids - under high pressures. In general, they serve to store the largest possible amount of gas in a relatively manageable volume of the device at pressures in the order of about 350 bar, in the order of about 700 bar or in the order of 1100 to 1200 bar, particularly for light gases such as hydrogen.

Type IV pressure vessels or tanks have a metal-free body that typically comprises a carbon fiber reinforced polymer composite, wrapped and/or braided over a thermoplastic polymeric liner. Suitable pressure vessel materials comprise laminated layers of wrapped glass fiber filaments or other synthetic filaments which are bonded together by a thermal curing or thermoplastic resin. An elastomeric or other non-metal resilient liner is placed inside the composite casing to seal the vessel and to prevent liquids within from contacting the composite material. The composite construction of the vessels offers numerous advantages, such as lightness in weight and resistance to corrosion, fatigue and catastrophic failure. These properties are due to the high specific strength of the reinforcing fibers or filaments, which are typically oriented in the direction of the major forces in the construction of the pressure vessels.

Each vessel has a valve coupled thereto for filling the vessel with compressed liquid. However, the valve cannot be directly connected to the polymer liner. For this reason, a boss needs to be provided for coupling the valve to the vessel.

JP H07 310895 A discloses pressure container wherein an electric insulating layer is formed on the outer surface of a base of an inner liner, and an outer liner is formed while winding a reinforcing yarn made of carbon fibers around the layer. The electric insulating layer is formed by coating resin having electric insulating properties on the peripheral surface of a cylindrical shaft.

JP H07 158798 A discloses a plastic pressure vessel that has a metal base inserted and fixed to the end wall of a vessel body molded by rotation molding. The base has a cylindrical shaft allowing the vessel body to communicate with the inside and outside, and a flange protruded from one end of the cylindrical shaft, and they are buried in the end wall.

JP 2017 020652 A discloses a high pressure gas container or high pressure gas pipeline that contains copolymerization units of vinylidene fluoride and tetrafluoroethylene, and includes a layer comprising a copolymer having a ratio of vinylidene fluoride units to a tetrafluoroethylene units of 10/90-60/40 in terms of mole ratio.

Anonymous: "Shoulder to shoulder across borders: Light Vehicle 2025 Demonstrators", 4 June 2020 (2020-06-04), pages 1-16, XP055864495, discloses a construction of a hydrogen tank.

US 2009/266823 A1 discloses a method for manufacturing a polymer bladder assuring the internal sealing of a tank vis-a-vis a pressurized fluid which is contained therein, wherein said polymer is a thermosetting polymer, and said method comprises at least one step of polymerizing at least two precursor compounds of said thermosetting polymer carried out in a mould in rotation. The document further discloses a tank for storing a pressurized fluid for example a type IV tank comprising said polymer bladder.

JP H10 332085 A discloses a pressure-resisting container, wherein a base head part on one end side of a base part is supported by a shoulder part and a cylindrical head part of an inside shell, a disc type burying part on the outside of the one end side is buried between the shoulder parts of the inside shell, and a cylindrical base part head part is held from the outside on a polar part opening part of a shoulder part of an outside shell.

### Aim of the invention

An aim of the invention may be to provide a stable and integrated interface between boss and liner, for example to prevent blow outs and/or accumulations of gas between the boss and liner.

A further aim of the invention may be to provide a boss-liner structure showing improved resistance against expansion or contraction.

Another aim of the invention may be to provide a method for forming such a boss-liner structure.

### Description of the invention

The invention is set out in the appended set of claims. The aim of providing a method for forming a boss-liner structure is achieved according to the invention by a method showing the technical characteristics of the first independent claim.

In a first aspect of the invention, which can occur in combination with the other aspects and embodiments of the invention described herein, the invention comprises a method for the production, by means of rotational molding, of a boss-liner structure for a type IV pressure vessel from a material containing a curable raw material.

The method comprises providing a mold, for forming a liner comprising a hollow body defined by an elongated cylindrical liner wall having opposed inner and outer surfaces extending between a first end and a second end of the liner,
wherein the cylindrical liner wall comprises a cylindrical main portion, a rounded head portion and a cylindrical neck, wherein the cylindrical liner wall has a passage opening near the first end of the liner, wherein the passage opening is determined by an edge of the liner, and
providing a boss having a boss bore extending axially through the boss, wherein the boss bore is determined by a cylindrical wall having an inner surface, and a flange projecting radially outward having inner and outer flange surfaces located opposite to each other,
wherein the boss is arranged so that the boss bore at least partially extends into an interior of the mold, and so that the outer flange surface faces the inner surface of the mold.

The method further comprises providing a sealing element in the boss bore through the boss; filling a mold cavity in the mold with the material; heating the material to a first predetermined temperature; rotating the mold so that the liner is formed from the material, wherein the liner is formed at the inner and outer sides of the flange and in the bores or recesses; and cooling the formed liner to a second predetermined temperature.

Due to the presence of the boss, particularly the flange of the boss, in the interior of the mold during the production of the liner by rotational molding, the boss is easily integrated and centered in the liner. Moreover, a well-sealed structure is formed due to the liner being formed at the inner and outer sides of the flange. Furthermore, the boss is secured against axial rotation relative to the liner by the anchors, i.e., parts of the formed liner extending in the bores or recesses of the flange.

Thus, at least one of the following traditional processing steps may be omitted: drilling out, deburring and removing all dirt from the zone of the liner where the boss is to be provided, applying a seal, mounting the boss and then cleaning up the structure again.

In a first embodiment according to the invention, which can occur in combination with the other aspects and embodiments of the invention described herein, the sealing element extends only partially into the boss bore so that the liner formed while rotating the mold extends partially into the boss bore. In a further embodiment according to the invention, the sealing element may be provided with a substantially semicircular end part facing the interior of the mold and arranged in such a way that, in an axial direction of the boss bore through the boss, the axial position of the inner side of the neck of the boss corresponds to the axial position of a point of the semicircular end part.

By partially covering the inner side of the wall surrounding the boss bore, or by integrating it into the liner, a good sealing can be provided up to a connecting element, for example a valve, that is connected to the boss, for example by means of a thread. As a result, the structure or the pressure vessel will suffer less from expansion or contraction.

In a second embodiment according to the invention, which can occur in combination with the other aspects and embodiments of the invention described herein, the mold is defined by an elongated cylindrical mold wall having an inner surface that extends between a first end and a second end of the mold, wherein the mold wall comprises a cylindrical main portion, a rounded head portion and an opening near the first end of the mold, wherein the boss is arranged so that the boss bore extends through the opening in the mold and is in fluid communication with the interior of the mold, and so that the outer flange surface faces the inner surface of the mold. In a further embodiment according to the invention, the mold wall may comprise a second opening near the second end of the mold.

In a third embodiment according to the invention, which can occur in combination with the other aspects and embodiments of the invention described herein, the mold is provided with a second opening in a second front end and the method further comprises providing a second boss having a boss bore extending axially through the second boss, wherein the boss bore is determined by a cylindrical wall having an inner surface, and a second flange projecting radially outward having inner and outer flange surfaces located opposite to each other, wherein the second boss is arranged so that the boss bore extends into an interior of the mold, and so that the outer flange surface faces the inner surface of the mold, and providing a second sealing element in the boss bore through the second boss. In a further embodiment according to the invention, the boss and the second boss may be facing away from each other.

In a second aspect of the invention, which can occur in combination with the other aspects and embodiments of the invention described herein, the invention comprises a boss-liner structure for a type IV pressure according to independent claim 8. The structure comprises a polymeric, preferably thermoplastic, liner, comprising a hollow body defined by an elongated cylindrical liner wall having opposed inner and outer surfaces extending between a first end and a second end of the liner. The cylindrical liner wall comprises a cylindrical main portion, a rounded head portion and a cylindrical neck, wherein the cylindrical liner wall has a passage opening near the first end of the liner, wherein the passage opening is determined by an edge of the liner. The structure further comprises a boss having a boss bore extending axially through the boss, wherein the boss bore is determined by a cylindrical wall having an inner surface, wherein the boss bore is in fluid communication with an interior of the pressure vessel.

The boss comprises a flange having inner and outer flange surfaces located opposite to each other, wherein the inner flange surface faces the inner surface of the liner and the outer flange surface faces the outer surface of the liner, wherein the flange is integrated in the cylindrical neck of the cylindrical wall.

In an embodiment according to the invention, which can occur in combination with the other aspects and embodiments of the invention described herein, the flange is integrated in a monolithic layer of the cylindrical neck.

In a third aspect of the invention, which can occur in combination with the other aspects and embodiments of the invention described herein, the invention comprises a pressure vessel configured for storing a pressurized fluid, comprising a boss-liner structure manufactured as described above or a boss-liner structure as described above, and an outer composite shell, wherein the outer composite shell surrounds an outer perimeter of the liner. In an embodiment according to the invention, which can occur in combination with the other aspects and embodiments of the invention described herein, said outer composite shell is formed by braiding a number of strands of fiber around at least part of an outer perimeter of said liner.

### Brief description of the figures

The invention will hereafter be further elucidated by reference to an exemplary embodiment shown in the drawings.
Figure 1 shows a schematic view of a pressure vessel according to an embodiment of the present invention;
Figure 2 shows an exploded view of a boss and liner structure according to a first embodiment of the present invention for the pressure vessel shown in Figure 1;
Figure 3 shows an exploded view of a boss and liner structure according to a second embodiment of the present invention for the pressure vessel shown in Figure 1; and
Figure 4 shows an exploded view of a boss and liner structure according to a third embodiment of the present invention for the pressure vessel shown in Figure 1.

### Detailed description of the figures

The present invention will hereafter be described with respect to particular embodiments and with reference to certain drawings, but the invention is not limited thereto and is defined only by the claims. The drawings described are merely schematic depictions and are non-limiting. In the drawings, the dimensions of certain parts may be exaggerated, and not drawn to scale, for illustrative purposes. The dimensions and the relative dimensions do not necessarily correspond to the actual reductions to practice of the invention.

Furthermore, the terms "first", "second", "third" and the like are used in the description and in the claims for distinguishing between similar elements, and not necessarily for describing a sequential or chronological order. The terms in question are interchangeable under the appropriate circumstances and the embodiments of the invention may be carried out in other sequences than described or illustrated here.

Moreover, the terms "top", "bottom", "over", "under" and the like are used in the description and the claims for descriptive purposes and not necessarily for indicating relative positions. The terms so used are interchangeable under the appropriate circumstances, and the embodiments of the invention may be carried out in other orientations than those described or illustrated herein.

Furthermore, the different embodiments, although referred to as "preferred forms", should rather be understood by way of example, as ways in which the invention may be carried out, and not as limiting the scope of the invention.

The term "comprising", as used in the claims, should not be interpreted as being restricted to the means or steps listed thereafter; the term does not exclude other elements or steps. The term should be interpreted as specifying the presence of said features, elements, steps or components as referred to, without, however, precluding the presence or addition of one or more additional features, elements, steps or components, or groups thereof. Thus, the scope of the expression "a device comprising means A and B" should not be limited to devices consisting only of components A and B. What is meant is that with respect to the present invention, only the components A and B are listed, and the claim should further be interpreted as also comprising equivalents of those components.

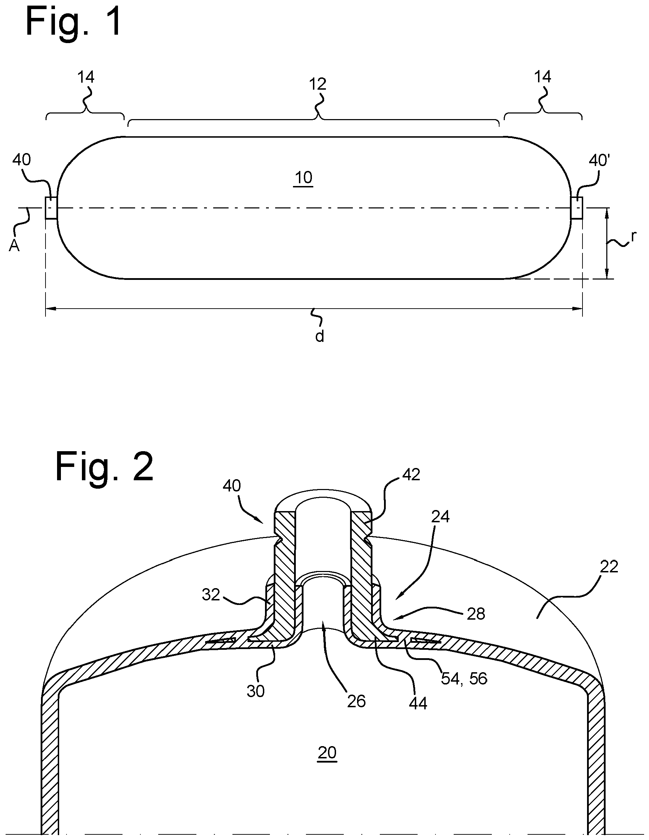

Figure 1 shows an elongated pressure vessel 10, having a main portion 12 and end portions 14, cylindrically shaped with a radius and extending over a length d between both ends of the pressure vessel 10. A metal boss 30 is arranged at one or both ends of the pressure vessel 10 so as to provide a port for communicating with the interior of the pressure vessel 10. The pressure vessel 10 is formed by an inner (thermoplastic) polymeric liner 20 covered by an outer composite shell. In this case, "composite" refers to a fiber reinforced resin matrix material, such as a fiber wrapped or laminated structure. The pressure vessel 10 according to the present invention may be manufactured for storing about one liter, two liters, three liters, five liters, eight liters, thirteen liters, twenty-one liters, thirty-four liters, fifty-five liters and other suitable amounts of hydrogen.

Figures 2-4 show details of improved boss and liner structures for a pressure vessel. The liner 20 has a generally cylindrical shape having a substantially semicircular end section 22 with a neck-shaped end section 24. The neck-shaped end section 24 comprises a passage 26 adapted for being aligned within an opening in the outer composite shell, and a hollow wall 28 surrounding the passage. The hollow wall 28 comprises an inner annular wall part 30 and an outer annular wall part 32.

The liner 20 according to the present invention may be manufactured from any material available to the person skilled in the art. Suitable thermoplastic (co)polymers are for example polyamides (PA), polyolefins, for example polypropene (PP), polyethene (PE), polytetrafluoroethylene (PTFE), polyphenylene ether (PPE or PPO), etcetera, amorphous and/or crystalline polyesters such as polyalkylene terephthalates, for example polyethene terephthalate (PETP or PET), polybutene terephthalate (PBT), etc., or polyimides (PI), such as for example polyetherimide (PEI), polyamide-imide (PAI), or polymethyl(meth)acrylate (PMMA), polyether methacrylate (PEMA), and polycarbonates.

The boss 40 extends in the hollow wall 28 of the neck-shaped end section 24 and comprises a neck 42 and flange 44 projecting radially outward. The neck 42 defines a passage 44 aligned with the passage 26 of the liner 20, allowing high-pressure fluid to be communicated to the interior of the pressure vessel 10. The flange 44 has an inner side 46 and an outer side 48. A bottom opening 50 is defined at the inner side of the flange 44. The bottom opening is connected to an upper opening 52 at the outer side of the flange 44 by means of a number of discrete bores 54. The bores 54 may for example be circular or elongated in cross section.

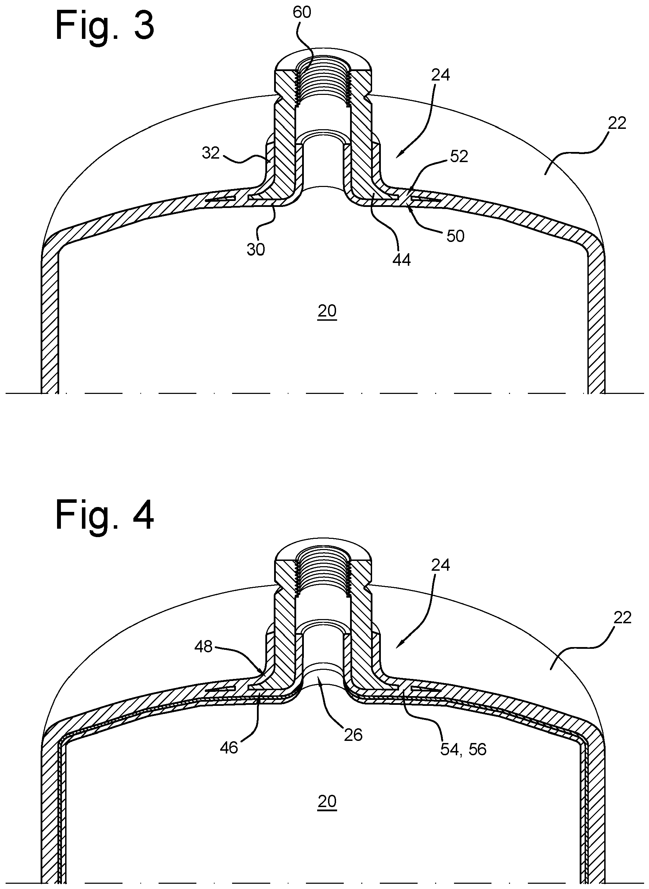

Figures 3 and 4 show the boss-liner structure provided with a thread 60 on the inner surface of the neck 42. Figure 4 further shows a layered liner 20 consisting of several layers of at least two different materials. The inner and outer monolithic layers are manufactured from the same material, which is preferably molded by rotational molding. The flange is integrated in the outer layer.

A method for connecting the liner 20 and the boss 40 comprises allowing a liquid polymer material for the liner 20 to flow at the inner and outer sides 46, 48 of the flange 44 and into the bores 54 so as to fill these. After solidifying, the liner material forms an anchor 56 in the bores 54. The liner 20 is mechanically interlocked with the boss 40 by the anchors 56 formed in the bores 54, which in this embodiment connect the liner material at the inner side 30 to the liner material at the outer side 32. Alternatively, a "bore" does not need to extend all the way through a member. As such, the bore 54 may extend from its openings 50, 52 to a closed end thereof. In both embodiments, separation of the liner 20 from the boss 40 is prevented even under extreme pressure circumstances.

A method for forming a pressure vessel 10 comprises inserting a boss 40 into het front part of a mold. The protruding part of the boss is secured at the outer side of the mold so that the boss can no longer move. The boss is positioned in such a way in het front part of the mold that liner material may come between the mold and the boss (i.e., at the outer side of the boss). Further, the boss receives a sealing means provided with an air-permeable filter or Teflon plastic membrane extending through the boss and ensuring that no material can fall out of the mold, and also ensuring that a liner layer can adhere to the inner side of the boss. As a result, the boss is completely surrounded in the mold, both at the inner and at the outer side, so that that no further membrane sealing is required.

By placing the boss in the mold, the boss is centered and attached to the liner in a single step, with a complete sealing at the inner and outer sides of the flange of the boss. As a result, production is simplified, as it is no longer necessary to carry out the successive steps of drilling an opening into the liner for receiving the boss, cleaning the elements, applying a (membrane) seal, mounting the boss and cleaning the tank again.

### Reference list

10. Pressure vessel
12. Main portion of the pressure vessel
14. End portions of the pressure vessel
20. Liner
22. Semicircular end section
24. Neck-shaped end section
26. Passage through the Neck-shaped end section
28. Hollow Wall of the Neck-shaped end section
30. Inner annular wall part of the Hollow Wall
32. Outer annular wall part of the Hollow Wall
40. Boss
42. Neck of the Boss
44. Flange of the Boss
46. Inner side of the Flange
48. Outer side of the Flange
50. Opening at the Inner side of the Flange
52. Opening at the Outer side of the Flange
54. Bore through the Flange
56. Anchor in the Bore
60. Thread

## Claims

1. Method for the production, by means of rotational molding, of a boss-liner structure for a type IV pressure vessel from a material containing a curable raw material, comprising the steps of:
▪ providing a mold, for forming a liner (20) comprising a hollow body defined by an elongated cylindrical liner wall having opposed inner and outer surfaces extending between a first end and a second end of the liner, wherein the cylindrical liner wall comprises a cylindrical main portion, a rounded head portion (22) and a neck-shaped end section (24), wherein the cylindrical liner wall has a passage opening near the first end of the liner, wherein the passage opening is determined by an edge of the liner;
▪ providing a boss (30) having a boss bore extending axially through the boss, wherein the boss bore is determined by a cylindrical wall (32) having an inner surface, and a flange (34) projecting radially outward having inner and outer flange surfaces located opposite to each other, wherein the boss (30) is arranged so that the bore at least partially extends into an interior of the mold, and so that the outer flange surface faces the inner surface of the mold;
▪ providing a sealing element in the boss bore through the boss;
**characterized in that** the method comprises the steps of:
▪ filling a mold cavity in the mold with a first thermoplastic material;
▪ heating the material to a first predetermined temperature;
▪ rotating the mold so that an outer monolithic layer of the liner is formed from the first thermoplastic material, wherein the liner is formed at the inner and outer sides of the flange and in bores or recesses of the flange and wherein the flange is integrated into the outer monolithic layer;
▪ forming at least one further layer of the liner inside the outer monolithic layer, such that the liner is a layered liner consisting of a plurality of monolithic layers of at least two different thermoplastic materials; and
▪ cooling the formed liner to a second predetermined temperature.

2. Method according to claim 1, wherein the sealing element (50) extends only partially into the boss bore so that the linerformed while rotating the mold extends into the passage through the boss.

3. Method according to claim 1 or claim 2, wherein the sealing element is provided with a substantially semi-circular end part facing the interior of the mold and arranged in such a way that the axial position of the inner side of the neck of the boss corresponds to the axial position of a point of the semi-circular end part.

4. Method according to any of the preceding claims, wherein the mold is defined by an elongated cylindrical mold wall having an inner surface that extends between a first end and a second end of the mold, wherein the mold wall comprises a cylindrical main portion, a rounded head portion and an opening near the first end of the mold,
wherein the boss is arranged so that the boss bore extends through the opening in the mold and is in fluid communication with the interior of the mold, and so that the outer flange surface faces the inner surface of the mold.

5. Method according to any of the preceding claims, wherein the mold wall comprises a second opening near the second end of the mold.

6. Method according to any of the preceding claims, wherein the mold is provided with a second opening in a second front end and the method further comprises:
▪ providing a second boss (30') having a boss bore extending axially through the second boss, wherein the boss bore is determined by a cylindrical wall having an inner surface, and a second flange projecting radially outward having inner and outer flange surfaces located opposite to each other, wherein the second boss (30') is arranged so that the boss bore extends into an interior of the mold, and so that the outer flange surface faces the inner surface of the mold;
▪ providing a second sealing element in the boss bore through the second boss.

7. Method according to any of the preceding claims, wherein the boss (40) and the second boss (40') are facing away from each other.

8. Boss-liner structure for a type IV pressure vessel, comprising:
▪ a thermoplastic liner (20) comprising a hollow body defined by an elongated cylindrical liner wall having opposed inner and outer surfaces extending between a first end and a second end of the liner, wherein the cylindrical liner wall comprises a cylindrical main portion, a rounded head portion (22) and a neck-shaped end section (24), wherein the cylindrical liner wall has a passage opening near the first end of the liner, wherein the passage opening is determined by an edge of the liner; and
▪ a boss having a boss bore extending axially through the boss, wherein the boss bore is determined by a cylindrical wall having an inner surface, wherein the boss bore is in fluid communication with an interior of the pressure vessel; wherein the boss has a flange (44) having inner and outer flange surfaces located opposite to each other, wherein the inner flange surface faces the inner surface of the liner, and the outer flange surface faces the outer surface of the liner,
**characterized in that** the flange is integrated in the neck-shaped end section (24) of the cylindrical wall, wherein the liner is a layered liner consisting of a plurality of monolithic layers of at least two different thermoplastic materials and wherein the flange is integrated in the outer monolithic layer.

9. Boss-liner structure according to claim 8, wherein the boss is provided with a thread on the inner surface of the cylindrical wall.

10. Pressure vessel (100) configured for storing a pressurized fluid, comprising:
- a boss-liner structure manufactured according to any of the claims 1-7 or a boss-liner structure according to any of the claims 8-9; and
- an outer composite shell, wherein the outer composite shell surrounds an outer perimeter of the liner.

11. Pressure vessel according to claim 10, wherein said outer composite shell is formed by braiding a number of strands of fiber around at least part of an outer perimeter of said liner.

## Patentansprüche

1. Verfahren für die Produktion mittels Rotationsformen einer Nabenauskleidungsstruktur für einen Typ-IV-Druckbehälter aus einem Material mit aushärtbarem Rohmaterial, das die folgenden Schritte umfasst:
• Bereitstellen einer Form zum Bilden einer Auskleidung (20), die einen Hohlkörper umfasst, der durch eine langgestreckte, zylindrische Auskleidungswand definiert ist, die gegenüberliegende Innen- und Außenflächen aufweist, die sich zwischen einem ersten Ende und einem zweiten Ende der Auskleidung erstrecken, wobei die zylindrische Auskleidungswand einen zylindrischen Hauptabschnitt, einen gerundeten Kopfabschnitt (22) und einen halsförmigen Endabschnitt (24) umfasst, wobei die zylindrische Auskleidungswand eine Kanalöffnung in der Nähe des ersten Endes der Auskleidung aufweist, wobei die Kanalöffnung durch eine Kante der Auskleidung bestimmt ist;
• Bereitstellen einer Nabe (30), die eine Nabenbohrung, die sich axial durch die Nabe erstreckt, wobei die Nabenbohrung durch eine zylindrische Wand (32) mit einer Innenfläche bestimmt ist, und einen Flansch (34), der radial nach außen vorsteht und eine Flanschinnenfläche und eine Flanschaußenfläche aufweist, die einander gegenüberliegend angeordnet sind, umfasst, wobei die Nabe (30) derart angeordnet wird, dass sich die Bohrung zumindest teilweise in einen Innenraum der Form erstreckt, und derart, dass die äußere Flanschfläche der Innenfläche der Form zugewandt ist;
• Bereitstellen eines Dichtungselements in der Nabenbohrung durch die Nabe;
**dadurch gekennzeichnet, dass** das Verfahren die folgenden Schritte umfasst:
• Befüllen eines Formhohlraums in der Form mit einem ersten thermoplastischen Material;
• Erwärmen des Materials auf eine erste vorgegebene Temperatur;
• Drehen der Form, derart, dass eine äußere monolithische Schicht der Auskleidung aus dem ersten thermoplastischen Material gebildet wird, wobei die Auskleidung an der Innen- und Außenseite des Flanschs und in Bohrungen oder Vertiefungen des Flanschs gebildet wird und wobei der Flansch in die äußere monolithische Schicht integriert wird;
• Bilden mindestens einer weiteren Schicht der Auskleidung im Inneren der äußeren monolithischen Schicht, derart, dass die Auskleidung eine geschichtete Auskleidung ist, die aus mehreren monolithischen Schichten aus mindestens zwei verschiedenen thermoplastischen Materialien besteht; und
• Abkühlen der gebildeten Auskleidung auf eine zweite vorgegebene Temperatur.

2. Verfahren nach Anspruch 1, wobei sich das Dichtungselement (50) lediglich teilweise in die Nabenbohrung erstreckt, derart, dass sich die Auskleidung, die gebildet wird, während die Form gedreht wird, durch die Nabe in den Kanal erstreckt.

3. Verfahren nach Anspruch 1 oder Anspruch 2, wobei das Dichtungselement mit einem im Wesentlichen halbkreisförmigen Endabschnitt versehen ist, der dem Innenraum der Form zugewandt ist und so angeordnet wird, dass die axiale Position der Innenseite des Halses der Nabe der axialen Position eines Punktes des halbkreisförmigen Endabschnitts entspricht.

4. Verfahren nach einem der vorhergehenden Ansprüche, wobei die Form durch eine langgestreckte, zylindrische Formwand definiert ist, die eine Innenfläche aufweist, die sich zwischen einem ersten Ende und einem zweiten Ende der Form erstreckt, wobei die Formwand einen zylindrischen Hauptabschnitt, einen gerundeten Kopfabschnitt und eine Öffnung in der Nähe des ersten Endes der Form aufweist,
wobei die Nabe so angeordnet wird, dass sich die Nabenbohrung durch die Öffnung in der Form erstreckt und sich mit dem Innenraum der Form in fluidtechnischer Verbindung befindet, und so, dass die Flanschaußenfläche der Innenfläche der Form zugewandt ist.

5. Verfahren nach einem der vorhergehenden Ansprüche, wobei die Formwand eine zweite Öffnung in der Nähe des zweiten Endes der Form aufweist.

6. Verfahren nach einem der vorhergehenden Ansprüche, wobei die Form mit einer zweiten Öffnung in einem zweiten Stirnende versehen ist und das Verfahren ferner Folgendes umfasst:
• Bereitstellen einer zweiten Nabe (30'), die eine Nabenbohrung, die sich axial durch die zweite Nabe erstreckt, wobei die Nabenbohrung durch eine zylindrische Wand mit einer Innenfläche bestimmt ist, und einen zweiten Flansch, der radial nach außen vorsteht, der eine Flanschinnenfläche und eine Flanschaußenfläche aufweist, die einander gegenüberliegend angeordnet sind, aufweist, wobei die zweite Nabe (30') so angeordnet wird, dass sich die Nabenbohrung in einen Innenraum der Form erstreckt, und so, dass die Flanschaußenfläche der Innenfläche der Form zugewandt ist;
• Bereitstellen eines zweiten Dichtungselements in der Nabenbohrung durch die zweite Nabe.

7. Verfahren nach einem der vorhergehenden Ansprüche, wobei die Nabe (40) und die zweite Nabe (40') voneinander abgewandt sind.

8. Nabenauskleidungsstruktur für einen Typ-IV-Druckbehälter, die Folgendes umfasst:
• eine thermoplastische Auskleidung (20), die einen Hohlkörper umfasst, der durch eine langgestreckte, zylindrische Auskleidungswand definiert ist, die gegenüberliegende Innen- und Außenflächen aufweist, die sich zwischen einem ersten Ende und einem zweiten Ende der Auskleidung erstrecken, wobei die zylindrische Auskleidungswand einen zylindrischen Hauptabschnitt, einen gerundeten Kopfabschnitt (22) und einen halsförmigen Endabschnitt (24) umfasst, wobei die zylindrische Auskleidungswand eine Kanalöffnung in der Nähe des ersten Endes des Auskleidung aufweist, wobei die Kanalöffnung durch eine Kante der Auskleidung bestimmt ist; und
• eine Nabe, die eine Nabenbohrung aufweist, die sich axial durch die Nabe erstreckt, wobei die Nabenbohrung durch eine zylindrische Wand mit einer Innenfläche bestimmt ist, wobei sich die Nabenbohrung mit einem Innenraum des Druckbehälters in fluidtechnischer Verbindung befindet; wobei die Nabe einen Flansch (44) aufweist, der eine Flanschinnenfläche und eine Flanschaußenfläche aufweist, die einander gegenüberliegend angeordnet sind, wobei die Flanschinnenfläche der Innenfläche der Auskleidung zugewandt ist und die Flanschaußenfläche der Außenfläche der Auskleidung zugewandt ist,
**dadurch gekennzeichnet, dass** der Flansch im halsförmigen Endabschnitt (24) der zylindrischen Wand integriert ist, wobei die Auskleidung eine geschichtete Auskleidung ist, die aus mehreren monolithischen Schichten aus mindestens zwei verschiedenen thermoplastischen Materialien besteht, und wobei der Flansch in der äußeren monolithischen Schicht integriert ist.

9. Nabenauskleidungsstruktur nach Anspruch 8, wobei die Nabe auf der Innenfläche der zylindrischen Wand mit einem Gewinde versehen ist.

10. Druckbehälter (100), der zum Speichern eines mit Druck beaufschlagten Fluids konfiguriert ist, der Folgendes umfasst:
- eine Nabenauskleidungsstruktur, die nach einem der Ansprüche 1-7 hergestellt ist, oder eine Nabenauskleidungsstruktur nach einem der Ansprüche 8-9; und
- eine Verbundaußenschale, wobei die Verbundaußenschale einen Außenumfang der Auskleidung umgibt.

11. Druckbehälter nach Anspruch 10, wobei die Verbundaußenschale durch Flechten einer Anzahl von Faserbündeln zumindest um einen Abschnitt eines Außenumfangs der Auskleidung gebildet ist.

## Revendications

1. Procédé pour la production, au moyen d'un moulage par rotation, d'une structure de chemise de bossage pour un récipient sous pression de type IV, à partir d'une matière contenant une matière première polymérisable, comprenant les étapes consistant à :
• prévoir un moule, pour former une chemise (20) comportant un corps creux défini par une paroi de chemise cylindrique allongée ayant des surfaces intérieure et extérieure opposées s'étendant entre une première extrémité et une deuxième extrémité de la chemise, cette paroi de chemise cylindrique comportant une première partie principale cylindrique, une partie tête arrondie (22) et une section extrême en forme de col (24), cette paroi de chemise cylindrique ayant une ouverture de passage près de la première extrémité de la chemise, cette ouverture de passage étant déterminée par un bord de la chemise ;
• prévoir un bossage (30) ayant un alésage de bossage s'étendant axialement à travers le bossage, cet alésage de bossage étant déterminé par une paroi cylindrique (32) ayant une surface intérieure, et une bride (34) faisant saillie radialement vers l'extérieur ayant des surfaces de bride intérieure et extérieure situées de façon opposée l'une à l'autre, le bossage (30) étant disposé de manière à ce que l'alésage s'étende au moins partiellement dans un intérieur du moule, et de manière à ce que la surface extérieure de la bride soit en face de la surface intérieure du moule ;
• prévoir un élément d'étanchéité dans l'alésage du bossage à travers le bossage ;
**caractérisé en ce que** ce procédé comprend les étapes consistant à :
• remplir une cavité de moule dans le moule avec une première matière thermoplastique ;
• chauffer cette matière jusqu'à une première température prédéterminée ;
• tourner le moule de sorte qu'une couche monolithique extérieure de la chemise soit formée à partir de la première matière thermoplastique, la chemise étant formée aux bords intérieur et extérieur de la bride et dans des alésages ou des évidements de la bride et la bride étant intégrée dans cette couche monolithique extérieure ;
• former au moins une autre couche de la chemise à l'intérieur de la couche monolithique extérieure, de manière à ce que la chemise soit une chemise multicouche consistant en une pluralité de couches monolithiques d'au moins deux matières thermoplastiques différentes ; et à
• refroidir la chemise formée jusqu'à une deuxième température prédéterminée.

2. Procédé selon la revendication 1, dans lequel l'élément d'étanchéité (50) ne s'étend que partiellement dans l'alésage du bossage de manière à ce que la chemise formée lors de la rotation du moule s'étende dans le passage à travers le bossage.

3. Procédé selon la revendication 1 ou la revendication 2, dans lequel l'élément d'étanchéité est pourvu d'une partie extrême essentiellement semi-circulaire faisant face à l'intérieur du moule et disposée de manière à ce que la position axiale du côté intérieur du col du bossage corresponde à la position axiale d'un point de la partie extrême semi-circulaire.

4. Procédé selon l'une quelconque des revendications précédentes, dans lequel le moule est défini par une paroi de moule cylindrique allongée ayant une surface intérieure qui s'étend entre une première extrémité et une deuxième extrémité du moule, cette paroi de moule comprenant une partie principale cylindrique, une partie tête arrondie et une ouverture près de la première extrémité du moule,
le bossage étant disposé de manière à ce que l'alésage du bossage s'étende à travers l'ouverture dans le moule et soit en communication fluidique avec l'intérieur du moule, et de manière à ce que la surface extérieure de la bride soit en face de la surface intérieure du moule.

5. Procédé selon l'une quelconque des revendications précédentes, dans lequel la paroi du moule comporte une deuxième ouverture près de la deuxième extrémité du moule.

6. Procédé selon l'une quelconque des revendications précédentes, dans lequel le moule est pourvu d'une deuxième ouverture dans une deuxième extrémité avant, ce procédé comprenant en outre :
• la prévision d'un deuxième bossage (30') ayant un alésage de bossage s'étendant axialement à travers le deuxième bossage, cet alésage de bossage étant déterminé par une paroi cylindrique ayant une surface intérieure, et une deuxième bride faisant saillie radialement vers l'extérieur ayant des surfaces de bride intérieure et extérieure situées de façon opposée l'une à l'autre, le deuxième bossage (30') étant disposé de manière à ce que l'alésage s'étende dans un intérieur du moule, et de manière à ce que la surface extérieure de la bride soit en face de la surface intérieure du moule ;
• la prévision d'un deuxième l'élément d'étanchéité dans l'alésage du bossage à travers le deuxième bossage.

7. Procédé selon l'une quelconque des revendications précédentes, dans lequel le bossage (40) et le deuxième bossage (40') sont orientés à l'opposé l'un de l'autre.

8. Structure de chemise de bossage pour un récipient sous pression de type IV, comprenant :
• une chemise thermoplastique (20) comportant un corps creux défini par une paroi de chemise cylindrique allongée ayant des surfaces intérieure et extérieure opposées s'étendant entre une première extrémité et une deuxième extrémité de la chemise, cette paroi de chemise cylindrique comprenant une première partie principale cylindrique, une partie tête arrondie (22) et une section extrême en forme de col (24), cette paroi de chemise cylindrique ayant une ouverture de passage près de la première extrémité de la chemise, cette ouverture de passage étant déterminée par un bord de la chemise ; et
• un bossage ayant un alésage de bossage s'étendant axialement à travers le bossage, cet alésage de bossage étant déterminé par une paroi cylindrique ayant une surface intérieure, cet alésage de bossage étant en communication fluidique avec un intérieur du récipient sous pression ; le bossage comportant une bride (44) ayant des surfaces intérieure et extérieure de bride situées de façon opposée l'une à l'autre, la surface intérieure de la bride faisant face à la surface intérieure de la chemise, et la surface extérieure de la bride faisant face à la surface extérieure de la chemise, **caractérisée en ce que** la bride est intégrée dans la section extrême en forme de col (24) de la paroi cylindrique, la chemise étant une chemise multicouche consistant en une pluralité de couches monolithiques d'au moins deux matières thermoplastiques différentes et la bride étant intégrée dans la couche monolithique extérieure.

9. Structure de chemise de bossage selon la revendication 8, dans laquelle le bossage est pourvu d'un filetage sur la surface extérieure de la paroi cylindrique.

10. Récipient sous pression (100) configuré de façon à stocker un fluide pressurisé, comprenant :
- une structure de chemise de bossage fabriquée selon l'une quelconque des revendications 1-7 ou une structure de chemise de bossage selon l'une quelconque des revendications 8-9 ; et
- une coque composite extérieure, cette coque composite extérieure entourant un périmètre extérieur de la chemise.

11. Récipient sous pression selon la revendication 10, dans lequel la coque composite extérieure est formée en tressant un certain nombre de brins de fibre autour d'au moins une partie d'un périmètre extérieur de ladite chemise.
